# FASCICULE DE BREVET EUROPEEN

(11) **EP 2 885 899 B1**
(45) Date de publication et mention de la délivrance du brevet: **14.08.2019**
(21) Numéro de dépôt: 13763001.8
(22) Date de dépôt: 19.08.2013
(51) Int. Cl.: H04L 12/801, H04L 29/06

(54) **DISPOSITIF ET PROCÉDÉ DE TRANSFERT UNIDIRECTIONNEL DE DONNÉES**
VORRICHTUNG UND VERFAHREN ZUR UNIDIREKTIONALEN DATENÜBERTRAGUNG
DEVICE AND METHOD FOR UNIDIRECTIONAL DATA TRANSFER

(30) Priorité: 16.08.2012 FR 1202242
(43) Date de publication de la demande: 24.06.2015
(73) Titulaire: Airbus Defence and Space SAS, 31402 Toulouse Cedex 4 (FR)
(72) Inventeur: MARTY, Jean-Luc, F-31450 Montbrun Lauragais (FR); LAFFITTE DE PETIT, Jean-Luc, F-31450 Baziege (FR)
(74) Mandataire: Ipside
(86) Numéro de dépôt international: PCT/EP2013/067259
(87) Numéro de publication internationale: WO 2014/027117

(56) Documents cités:
- EP-A2- 0 963 082
- LAGADEC P: "Diode réseau et ExeFilter: 2 projets pour des interconnexions sécurisées", INTERNET CITATION, 5 juillet 2006 (2006-07-05), XP002454580, Extrait de l'Internet: URL:http://actes.sstic.org/SSTIC06/Diode_E xeFilter/SSTIC06-article-Lagadec-Diode_Exe Filter.pdf [extrait le 2007-10-01]
- L. PIÈTRE-CAMBACÉDÉS ET AL.: "An analysis of two new directions in control system perimeter security", SCADA SECURITY SCIENTIFIC SYMPOSIUM S-4, 2 janvier 2009 (2009-01-02), pages 4-0-4-28, XP002698333,
- ORDA A ET AL: "ROUTING WITH PACKET DUPLICATION AND ELIMINATION IN COMPUTER NETWORKS", IEEE TRANSACTIONS ON COMMUNICATIONS, IEEE SERVICE CENTER, PISCATAWAY, NJ. USA, vol. 36, no. 7, 1 July 1988 (1988-07-01), pages 860-866, XP000570702, ISSN: 0090-6778, DOI: 10.1109/26.2816

## Description

La présente invention relève du domaine des systèmes de transmission d'information.

Elle concerne plus particulièrement un système permettant la transmission unidirectionnelle de données entre deux serveurs, appelés ci-après « guichets » (ou « desk » dans la littérature anglo-saxonne) dans un sens seulement, communément appelé par l'homme du métier **"diode de données".**

Plus précisément, l'invention vise de nouveaux systèmes permettant de réaliser une transmission unidirectionnelle de données satisfaisant à des contraintes d'applications exigeantes en termes à la fois de sécurité et de débit, ainsi que les mécanismes d'implémentation d'une telle transmission.

### Préambule et art antérieur

Le problème de la transmission unidirectionnelle de données est lié dans un premier exemple d'applications à la transmission d'information d'un domaine non sécurisé (par exemple internet) vers un domaine sécurisé (par exemple un centre de contrôle militaire), cette transmission devant être réalisée sans qu'il soit possible de transmettre des informations du domaine sécurisé vers le domaine non sécurisé par la voie de transmission utilisée.

Un deuxième exemple d'utilisation de systèmes de transmission unidirectionnelle de données est le cas inverse de transmission de données du monde sécurisé vers le monde non sécurisé. C'est le cas par exemple de la transmission de données non confidentielles élaborées dans le domaine sécurisé (une usine par exemple) et transmises au domaine non sécurisé (internet) par une voie de transmission unidirectionnelle. Ce lien unidirectionnel du monde sécurisé vers le monde non sécurisé permet d'éviter que des opérateurs du monde non sécurisé ne puissent intervenir de façon malveillante dans le monde sécurisé en utilisant cette voie de transmission.

Selon l'état de l'art, un système de transmission unidirectionnelle de données utilise un composant physique appelé « diode de données optique ».

Il s'agit d'une voie de transmission dont le support est une fibre optique, ce composant étant adapté pour que le signal ne puisse transiter physiquement que dans un seul sens, ce qui présente le double avantage de rendre impossible une transmission d'information dans l'autre sens par ce lien, et de ne pas émettre un rayonnement électromagnétique que l'on pourrait espionner, au contraire d'un composant électrique.

Un tel rayonnement électromagnétique serait susceptible de permettre la reconstitution des données transmises.

L'utilisation de ces dispositifs de transmission de données, dits **"diodes de données"** entre zones de niveaux de sécurité différents permet :
- de transmettre de l'information du monde moins sécurisé vers le monde le plus sécurisé,
- d'interdire toute communication du monde le plus sécurisé vers les moins sécurisé, et ainsi d'éviter toute fuite d'information.

Un autre mode d'utilisation est envisageable : la transmission d'information d'un monde protégé vers un monde extérieur en évitant toute intrusion dans le premier.

Des systèmes de transmission unidirectionnelle de données 20 sont par exemple décrits dans les documents suivants :
- « Diode réseau et ExeFilter : 2 projets pour des interconnexions sécurisées », P. LAGADEC,
- « An analysis of two new directions in control system perimeter security », L. PIETRE-CAMBACEDES et al.

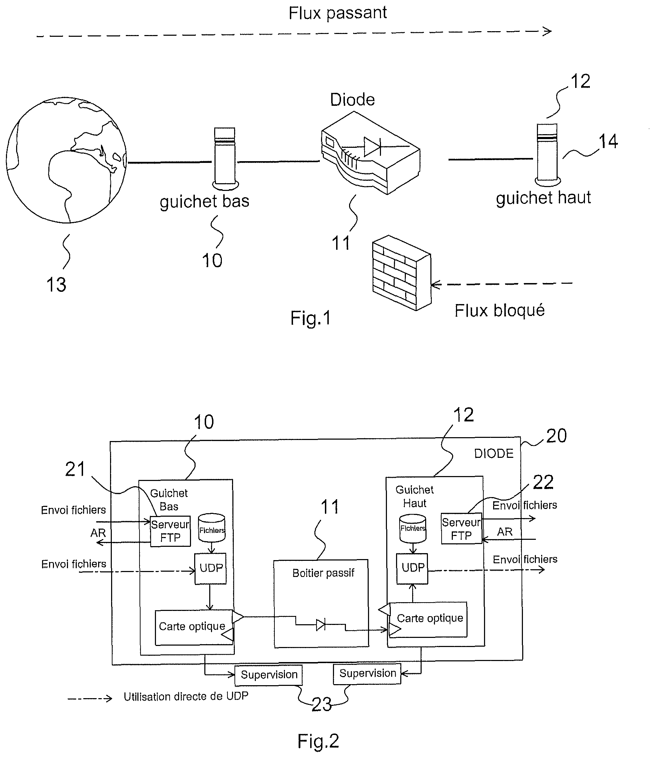

Les systèmes de transmission unidirectionnelle de données 20 du marché sont basés sur des architectures quasiment identiques. Ils sont constitués de trois éléments principaux (voir figures 1 et 2) :
- un guichet émetteur 10, ce guichet étant communément un serveur informatique,
- un guichet récepteur 12, ce guichet étant également un serveur informatique,
- une diode optique 11 assurant une voie de transmission unidirectionnelle entre le guichet émetteur 10 et le guichet récepteur 12,
- des moyens de supervision 23 de l'ensemble.

Dans les deux exemples d'applications décrits précédemment, soit le guichet émetteur 10 fait partie du monde non sécurisé et le guichet récepteur 12 fait partie du monde sécurisé, soit à l'inverse le guichet émetteur 10 fait partie du monde sécurisé et le guichet récepteur 12 fait partie du monde non sécurisé. Nous nous placerons dans la description qui suit dans le premier cas d'application.

Dans ce cas, le guichet émetteur 10 reçoit communément des fichiers du monde non sécurisé 13 par un serveur FTP (File Transfer Protocol) 21 pour ce qui est du transfert de fichier en se reposant sur des piles TCP-IP (Transmission Control Protocol - Internet Protocol).

Or, la transmission unidirectionnelle s'effectue plutôt en utilisant d'autres protocoles de transfert de données connus de l'homme du métier comme UDP (User Datagram Protocol) utilisé pour faire du transfert de flux. Ce protocole sans acquittement repose sur les couches de plus niveau Ethernet (assimilable au niveau 1 et 2 du modèle OSI) et IP (niveau 3 du modèle OSI) qui sont des protocoles mono directionnels. Par rapport à TCP l'avantage est de ne pas nécessiter d'accusé de réception, un tel accusé ne pouvant pas être renvoyé par le guichet récepteur vers le guichet émetteur à travers le lien unidirectionnel de données.

Lorsqu'un fichier est reçu par le guichet émetteur 10, il est transmis au guichet récepteur 12 à travers la diode optique 11, généralement après qu'il a été reçu dans son intégralité. Cette diode optique 11 est passive et assure qu'aucune information ne puisse transiter du guichet récepteur 12 du monde sécurisé vers le guichet émetteur 10 du monde non sécurisé. Une fois le fichier reçu par le guichet récepteur 12, il est stocké et mis à disposition des utilisateurs en utilisant un réseau 14 du monde sécurisé relié au guichet récepteur 12 via, par exemple, un serveur FTP 22.

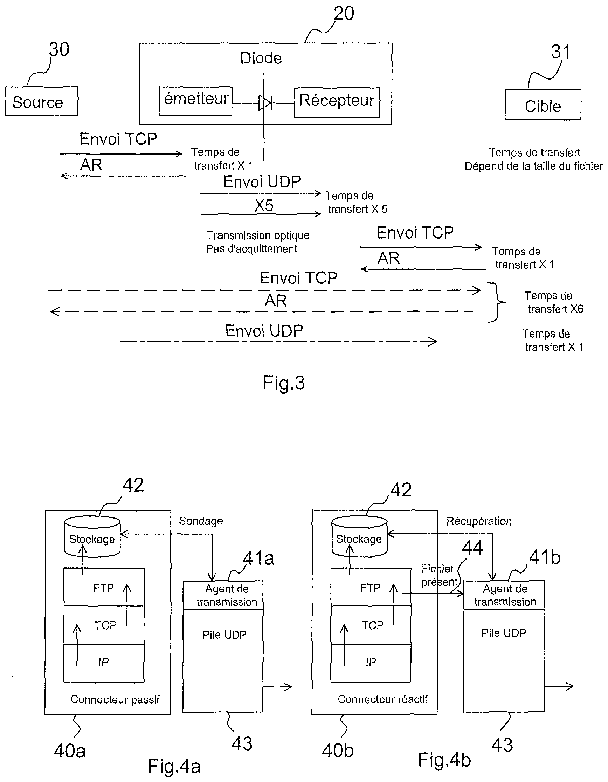

La figure 3 donne un bilan des échanges pour une transmission entre une source 30 de données et une cible 31 de ces données, à travers un tel système de transmission unidirectionnelle de données 20 suivant l'état de l'art.

En l'absence de communication du guichet récepteur vers l'émetteur, il est impossible de mettre en place des mécanismes de contrôle de flux et de contrôle sur arrivée au niveau du guichet récepteur, utilisés classiquement pour assurer des communications fiables de bout en bout entre un émetteur et un récepteur de données. (Le contrôle de flux permet de ralentir le guichet émetteur et de ne pas saturer les mémoires en réception. Le contrôle sur arrivée permet de s'assurer qu'il n'y a pas de trame perdue et de redemander la transmission le cas échéant.)

Il est donc nécessaire d'émettre les données avec une forte redondance. De ce fait le mécanisme utilisé pour fiabiliser la transmission suivant l'état de l'art des systèmes de transmission à diode de données est l'envoi multiple de chaque fichier à travers ladite diode de données. Il est courant de réémettre les données quatre ou cinq fois à titre de sécurité. Le débit de données s'en trouve donc réduit d'autant. Ceci a pour effet de diviser la bande passante proportionnellement au nombre de retransmissions. Un tel système 20 présente un débit de données faible (typiquement 10 à 40 Mbit/s) par rapport aux dispositifs de transmission de données "classiques", et insuffisant pour certaines applications, par exemple de transmission d'images satellites.

Le document « Routing with Packet Duplication and Elimination in Computer Networks », A. ORDA et al., décrit comment il est possible d'introduire de la redondance en dupliquant des paquets à émettre et en les émettant sur différentes routes d'un même réseau. Cette solution n'est cependant pas directement adaptée pour la transmission de fichiers sur un lien unidirectionnel entre un guichet émetteur et un guichet récepteur appartenant respectivement à deux réseaux présentant des niveaux de sécurité différents.

D'autre part, des pertes de données peuvent se produire au niveau du guichet récepteur, par exemple en cas de saturation du guichet récepteur, sans qu'il soit possible d'effectuer de correction du fichier de donnée.

L'invention a donc pour but de remédier à ces problèmes de débit faible de données et d'absence de possibilité de correction des fichiers de données après réception.

### Exposé de l'invention

A cet effet, la présente invention vise en premier lieu un procédé de transfert unidirectionnel de données entre un premier réseau dit réseau ouvert, et un second réseau dit réseau sécurisé, ledit procédé étant utilisé pour transférer des données d'un guichet émetteur relié au réseau ouvert (un guichet étant défini comme un système informatique contenant du matériel et du logiciel utilisés pour stocker, traiter et transmettre de l'information numérique), vers un guichet récepteur relié au réseau sécurisé, à travers au moins une voie de transmission comportant une diode de données physique.

Le procédé comporte une étape de transmission d'un ficher en cours de réception du guichet émetteur vers le guichet récepteur, paquet par paquet dès l'arrivée desdits paquets au niveau du guichet émetteur, et d'utilisation de la numérotation de paquets pour reconstruire le fichier coté guichet récepteur.

Le procédé comporte une étape d'émission des données à transmettre, sur N (N>=2) voies de transmission en parallèles, protégées chacune par une diode physique, et une étape de réception par le guichet récepteur des données reçues, dans N mémoires tampon (buffers).

Le procédé comporte une étape d'introduction d'un décalage de temps entre les informations redondantes transmises sur les différentes voies de transmission.

Selon une mise en oeuvre particulière, le procédé comporte une étape d'affectation aux opérations de lecture des paquets reçus sur le guichet récepteur d'un niveau de priorité plus élevé que les autres opérations effectuées sur ce guichet récepteur.

Selon une première mise en oeuvre, le procédé comporte des étapes suivantes :
300 - une source de fichiers dépose un fichier sur le guichet émetteur,
610 - dès qu'un bloc du fichier, configuré dans un protocole de transfert de fichier de type TCP (Transmission Control Protocol) est reçu par le guichet émetteur et acquitté, il est transmis à une couche applicative gérant un protocole de transfert de fichiers de type FTP (File Transfer Protocol) pour traitement et reconstitution du fichier, ainsi qu'a une application (une application étant définie comme un programme informatique, une logique câblée ou programmée effectuant des opérations sur des données numériques) en charge de l'encapsuler dans un protocole sans accusé de réception, tel que UDP (User Datagram Protocol),
620 - les trames UDP contenant le bloc de fichier sont envoyées vers le guichet récepteur au travers de chaque Diode,
630 - à la réception des trames UDP, le guichet récepteur extrait de la trame les informations TCP et une application utilise les informations de numérotation contenues dans la trame TCP pour vérifier que tous les blocs nécessaires à la reconstruction du fichier sont présents.

Selon une seconde mise en oeuvre, le procédé comporte des étapes suivantes :
300 - une source de fichiers dépose un fichier sur le guichet émetteur,
710 - dès qu'un bloc TCP du fichier est reçu par le guichet émetteur et acquitté, il est envoyé directement sur un niveau MAC-LLC (protocole Media Access Control - sous couche de contrôle de la liaison logique Logical Link Control) pour être transmis tel quel à travers chaque diode,
720 - à la réception des blocs TCP le guichet récepteur utilise les informations de numérotation contenues dans la trame TCP pour vérifier que tous les blocs nécessaires à la reconstruction du fichier sont présents.

Selon une troisième mise en oeuvre, le procédé comporte des étapes suivantes :
300 - une source de fichiers dépose un fichier sur le guichet émetteur,
810 - dès qu'un bloc TCP du fichier est reçu par le guichet émetteur et acquitté, le bloc de fichier extrait de la couche TCP est récupéré, puis dupliqué,
   - envoyé vers un serveur FTP, et
   - envoyé à un agent de transmission en charge de le transférer vers le guichet récepteur à travers chaque diode,
820 - transmission en parallèle du bloc de fichier,
830 - au niveau du guichet récepteur, extraction, par une application logicielle AppliH, des mémoires tampons (buffers), correspondants aux transmissions effectuées à travers chaque diode, les blocs qui sont arrivés et traite le premier d'entre eux qu'elle reconnaît comme correct, les autres instances étant éliminées.

Dans cette troisième mise en oeuvre, dans l'étape 810, le transfert est par exemple réalisé en utilisant le niveau MAC-LLC

Alternativement, dans l'étape 810, le transfert est réalisé en utilisant le niveau IP/UDP (Internet Protocol / User Datagram Protocol)

Selon une mise en oeuvre particulière, dans l'étape 810, la couche TCP, au niveau du guichet émetteur, réalise deux fonctions :
- gestion du protocole FTP pour envoyer un accusé de réception à l'émetteur,
- association, par une fonction AppliB , d'un numéro au bloc de fichier ainsi qu'une référence de fichier, et transmission pour faire passer le bloc de fichier au guichet récepteur à travers chaque diode optique.

Selon une mise en oeuvre particulière, l'étape 830 comprend également la reconstruction du fichier et son stockage ou l'émission d'une alerte de la fonction de supervision en cas de perte de paquet.

Selon une mise en oeuvre particulière, dans l'étape 810, on met en oeuvre un protocole d'échange de appliB vers appliH assurant les fonctions suivantes :
811 · gérer le séquencement des échanges,
812 · repérer le bloc transmis de manière unique et ce pour un fichier donné (pour le cas de reprise),
813 · contrôler qu'il ne manque pas des blocs de fichier pour sa reconstruction,
814 · finaliser transfert de fichier sur reprise uniquement des blocs manquants,
815 · prendre en compte les événements du protocole FTP pour les répercuter sur les transferts entre les deux guichets.

Dans ce cas, plus particulièrement, dans l'étape 815, une interruption du transfert FTP se traduit par une indication au guichet récepteur d'arrêter l'écoute et d'effacer la partie de fichier déjà reçue.

L'invention vise sous un second aspect un dispositif adapté à mettre en oeuvre un procédé tel qu'exposé.

Selon un mode particulier de réalisation, le dispositif comporte des moyens d'émission des données à transmettre, sur N (N>=2) voies de transmission en parallèle, protégées chacune par une diode physique, et en ce que le guichet récepteur comporte des moyens de recevoir les données transmises dans N mémoires tampon (buffers).

Dans ce cas, selon un mode plus particulier de réalisation, le dispositif comporte des moyens d'introduire un décalage de temps entre les informations redondantes transmises sur les différentes voies de transmission.

L'invention vise un système (comprenant un dispositif et un procédé tels qu'exposés) de transmission unidirectionnelle de données entre un guichet d'un réseau non sécurisé, et un guichet d'un réseau sécurisé, ledit système étant utilisé pour transmettre des données depuis un des guichets dit « guichet émetteur » vers l'autre des guichets dit « guichet récepteur ». Le système comporte au moins deux voies de transmission unidirectionnelle de données reliant le guichet émetteur et le guichet récepteur et des moyens adaptés pour transmettre les données par paquets numérotés du guichet émetteur vers le guichet récepteur, chacun des paquets étant transmis par les au moins deux voies de transmission unidirectionnelle en autant d'exemplaires.

Dans divers mode de mise en oeuvre, éventuellement utilisés en conjonctions lorsque cela est techniquement possible :
- le système introduit un décalage de temps dans la transmission de chaque exemplaire d'un paquet de données par au moins deux voies de transmission unidirectionnelles.
- le système transfère chaque paquet numéroté au guichet récepteur dès réception de ce paquet par le guichet émetteur sans attendre la réception complète des données par le guichet émetteur.
- le système reconstitue les données au niveau du guichet récepteur à partir des exemplaires de paquets numérotés transmis à ce guichet. Plus particulièrement, dans ce cas, le système utilise la numérotation des paquets pour reconstituer les données.
- la reconstitution des données au niveau du guichet récepteur est effectuée une seule fois.
- à chacune des au moins deux voies de transmission unidirectionnelle est associée une mémoire tampon dans laquelle sont stockés les exemplaires des paquets transmis par ladite voie. Plus particulièrement, dans ce cas, lesdites mémoires tampon associées auxdites au moins deux voies de transmission unidirectionnelle sont du type « premier arrivé - premier sorti ». Toujours dans ce cas, favorablement, le système extrait en permanence les exemplaires des paquets présents dans lesdites mémoires tampons. Encore plus particulièrement, le système vérifie qu'au moins un exemplaire des paquets de même numéro extraits des mémoires tampons est correct. Selon un mode de mise en oeuvre favorable, dans ce cas, le système traite le premier exemplaire de chaque paquet extrait d'une mémoire tampon et reconnu comme correct à des fins de reconstitution des données, les autres exemplaires n'étant pas traités.
- les opérations de lecture des paquets stockés dans les mémoires tampon ont un niveau de priorité plus élevé que les autres opérations effectuées par ledit système au niveau du guichet récepteur.
- les paquets de données sont configurés au niveau du guichet émetteur avec les caractéristiques des trames de transfert de données d'un protocole de transmission des données de type TCP (Transmission Control Protocol), puis ces paquets TCP sont encapsulés suivant un protocole de transmission de données sans accusé de réception avant d'être transmis au guichet récepteur à travers les voies de transmission unidirectionnelle.
- les données à transmettre sont stockées dans le guichet émetteur pendant une durée significativement plus longue que la durée de transmission et de reconstitution desdites données dans le guichet récepteur, et lorsqu'un paquet de données est incorrect ou manquant pour ladite reconstitution desdites données, le système envoie cette information à un système de récupération de données qui transmet au guichet émetteur l'ordre de renvoyer ledit paquet incorrect ou manquant stocké au niveau de ce guichet.

### Présentation des figures

Les caractéristiques et avantages de l'invention seront mieux appréciés grâce à la description qui suit, description qui expose les caractéristiques de l'invention au travers d'un exemple non limitatif d'application.

La description est faite dans le cas d'une transmission unidirectionnelle de données d'un monde non sécurisé vers un monde sécurisé. Le cas inverse s'en déduit directement. La description s'appuie sur les figures annexées qui représentent :
Figure 1 (déjà citée) : une illustration de la disposition générale d'un système de transmission unidirectionnelle de données d'un monde non sécurisé vers un monde sécurisé,
Figure 2 (déjà citée) : un schéma des principaux constituants d'un système de transmission unidirectionnelle de données de l'art antérieur,
Figure 3 (également déjà citée) : un bilan des échanges effectués de bout en bout par un tel système de transmission unidirectionnelle de données de l'art antérieur,
Figures 4a et 4b : des schémas de connecteurs de type passif et réactif,
Figure 5 : un schéma de système de transmission unidirectionnelle de données suivant l'invention adapté à émettre des informations en redondance sur trois voies de transmission unidirectionnelle parallèles, avec un décalage dans le temps,
Figure 6 : une illustration schématique d'une première variante de connecteur mettant en oeuvre un procédé selon l'invention,
Figure 7 : un une illustration schématique d'une seconde variante de connecteur mettant en oeuvre un procédé selon l'invention,
Figure 8 : une illustration schématique d'une troisième variante de connecteur mettant en oeuvre un procédé selon l'invention,
Figure 9 : des schémas fonctionnels des serveurs sécurisé et non sécurisé dans une variante de mise en oeuvre de l'invention,
Figure 10 : un logigramme des étapes d'un exemple de mise en oeuvre de procédé selon l'invention,
Figure 11 : un logigramme des étapes d'un second exemple de mise en oeuvre de procédé selon l'invention,
Figure 12 : un logigramme des étapes d'un troisième exemple de mise en oeuvre de procédé selon l'invention,
Figure 13 : un logigramme détaillant des fonctions réalisées dans une étape du procédé illustré figure 12.

### Description détaillée d'un mode de réalisation de l'invention

L'invention vise à la fois un dispositif et un procédé, formant ensemble un système de transmission de données de type diode de données.

Le système de transmission de données décrit ici repose sur trois éléments :
1/ un procédé permettant la transmission en parallèle de données redondées afin d'accroître le débit de données tout en garantissant la qualité de la transmission.
2/ un connecteur conçu pour réduire au maximum les temps de latences liés à la prise en charge du fichier pour effectuer son transfert.
3/ une retransmission sélective par un opérateur en cas perte de données.

### 1/ Gestion de la redondance de transmission de l'information

### Utilisation de plusieurs liaisons physiques unidirectionnelles.

Pour réduire les risques de pertes de données, les systèmes de transmission unidirectionnelle de données (diodes de données) suivant l'état de l'art gèrent la redondance de l'information par une transmission en série de données redondantes. Le système décrit ici introduit une redondance en parallèle dans la transmission des données, ce qui permet de ne pas réduire la bande passante.

Le dispositif utilise à cet effet trois liaisons (trois étant pris à titre d'exemple) optiques pour permettre un transfert simultané sur les trois liaisons. Il est clair que ce nombre pourrait être de deux ou d'une valeur quelconque supérieure à trois.

Les données sont transmises par paquet sur les trois liaisons optiques et stockées dans trois mémoires tampon sur le guichet récepteur 12. Chaque paquet est transmis à travers chacune des liaisons unidirectionnelles, donc trois fois. Le système vérifie au niveau du guichet récepteur 12 qu'au moins un exemplaire de chaque paquet est correct et que tous les paquets ont été transmis. La façon d'accéder à ces trois liaisons peut différer suivant la technologie retenue.

Pour ce faire, l'information doit être émise simultanément sur plusieurs liaisons physiques protégées par des diodes physiques. Avec ce type de système, la limitation en débit n'est plus contrainte en théorie que par la bande passante de la liaison unidirectionnelle. A cela il convient d'ajouter les limitations introduites par la mise en oeuvre des protocoles d'accès à la liaison de données et l'encapsulation de l'information utile pour en définir le débit réel efficace.

Cela montre qu'il faut apporter un soin particulier sur le choix des éléments physique et logiques utilisés pour relier les deux guichets. Si l'on fait le choix d'éléments sur étagère, il faut limiter le choix à des protocoles sans accusé de réception ni contrôle de flux.

Dans un exemple de mise en oeuvre, avec une pile de protocole classique UDP/Ethernet 1 Gbit/s, on peut atteindre des débits de 800Mbit/s sur un lien et si l'on transmet directement l'information sans utiliser UDP en envoyant directement l'information par Ethernet 1 Gbit/s avec des trames de 1500 octets, on peut atteindre de débits de plus de 980 Mbit/s.

### Décalage dans le temps de l'envoi des informations redondantes

Les pertes étant liées à la saturation des mémoires tampon (buffers) de réception, on choisit d'utiliser des algorithmes qui permettent de décaler dans le temps les envois vers le guichet récepteur 12 des trames contenant les informations redondantes. Ceci permet de s'assurer que dans le cas de saturation d'une mémoire tampon à un instant donné, la perte des paquets peut être compensée par la récupération des informations un peu plus tard sur un autre lien. De ce fait on introduit une désynchronisation entre les informations transmises sur les différents liens physiques par l'introduction d'un mécanisme de retard à l'émission entre les différents liens physiques.

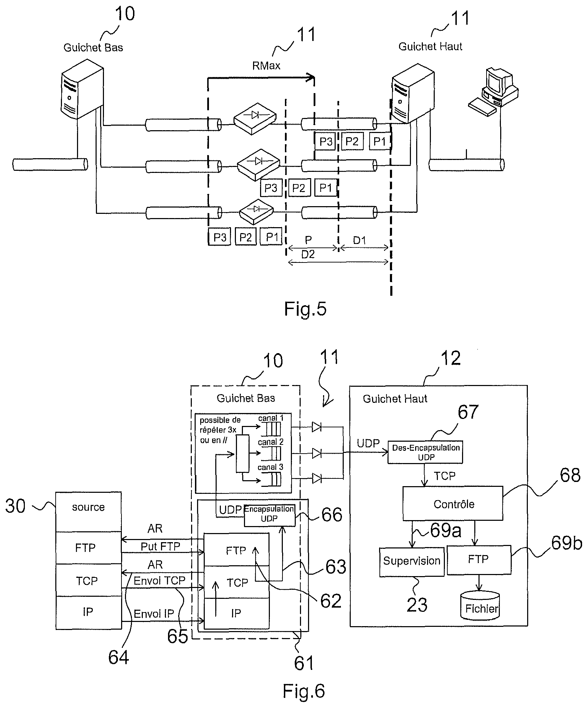

La figure 5 représente la transmission sur trois liens physiques. La transmission de paquets P1, P2 et P3 est décalée de D1 entre le lien 1 et le lien 2 et de D2 > D1 entre le lien 1 et le lien 3. En cas de saturation des mémoires tampon pendant un temps P comme représenté sur la figure 5 (ce cas de figure n'est qu'illustratif), le paquet P3 envoyé sur le lien 1 sera perdu ainsi que les paquets P1 et P2 envoyés sur le lien 2. L'information sera alors reconstituée à partir des paquets P1 et P2 reçus par le lien 1 et du paquet P3 du lien 2. Si la saturation venait à être plus importante, le lien 3 pourra encore être utilisé pour reconstituer l'ensemble des paquets.

Il est à noter que dans le pire cas, l'information ne peut être reconstituée qu'après réception du dernier paquet sur le dernier lien. Ceci introduit alors un retard égal à RMax (voir figure 5) lors de la réception du message. Donc si on souhaite avoir le débit spécifié, il faut tenir compte de ce délai. Son influence sur le débit est inversement proportionnelle à la taille du fichier.

Après avoir décrit ce mécanisme qui permet d'augmenter le débit tout en conservant la sécurisation du transfert par redondance, il est important de constater qu'il faut conserver une flexibilité de configuration sur les paramètres du mécanisme qui pourront être adapté en fonction du matériel considéré. Ces paramètres sont :
- le nombre de liens pour transporter la redondance
- les délais introduits pour la désynchronisation.

En effet la mise en place de mécanismes supplémentaires sur le guichet récepteur pour éviter la saturation des mémoires tampon en réception peut nécessiter l'optimisation de ces paramètres.

Les redondances d'émission des informations sont introduites pour compenser les pertes, qui proviennent notamment de la saturation des mémoires tampon de réception. Aussi les mécanismes de lecture des mémoires tampon sur le guichet récepteur 12 sont affectés d'un niveau de priorité plus élevé que les autres traitements (par exemple vérification d'intégrité des fichiers, passage d'un anti-virus, etc).

Par ailleurs, pour le guichet récepteur 12, on choisit un matériel permettant de limiter la saturation des mémoires tampon de réception, et donc de réduire les pertes.

On prévoit des mécanismes paramétrables sur le guichet récepteur 12 et le guichet émetteur 10, selon le type de matériel supportant les serveurs et le contexte d'utilisation.

Le nombre d'éléments de redondance et le décalage de temps entre les retransmissions d'un même paquet sont inversement proportionnels à la capacité du matériel.

### 2/ Connecteur

On décrit ici un mécanisme (mis en oeuvre sous forme de logique câblée ou programmée) constitutif du système de transmission unidirectionnelle de donnée. Ce mécanisme décrit sur les figures 4a et 4b est appelé connecteur. Son rôle est de déterminer quand des données sont présentes dans le guichet émetteur 10 et attendent un transfert vers le guichet récepteur 12.

Il existe deux types principaux de connecteurs : connecteur passif ou connecteur réactif.

Un connecteur passif 40a est constitué par exemple d'un serveur FTP (File Transfer Protocol). Un agent de transmission 41a (mis en oeuvre sous forme d'une application logicielle) est en charge de venir scruter une arborescence de dossiers (dans une zone de stockage 42) à fréquence fixe et de déterminer si un fichier à transmettre a été reçu. Si c'est le cas, l'agent de transmission 41a récupère le fichier et commande sa transmission vers le guichet récepteur 12, à travers une pile UDP 43.

Il est possible de conserver, pendant la transmission, une information de localisation du fichier transmis dans l'arborescence de départ (au niveau du guichet émetteur 10) et de stocker le fichier transmis dans une arborescence identique, coté guichet récepteur 12. Cela permet d'avoir coté guichet récepteur 12 un « miroir » du serveur coté guichet émetteur 10.

Un connecteur réactif 40b est constitué d'un élément capable, d'une part, de gérer un protocole FTP afin de recevoir le fichier et, d'autre part, d'alerter l'agent de transmission 41b vers le guichet récepteur 12, de la présence d'un élément à envoyer. A la réception de cette alerte, l'agent de transmission 41b récupère le fichier dans la zone de stockage 42 et le prépare pour le transfert, à travers la pile UPD 43.

La mise en oeuvre d'un connecteur réactif 40b demande l'utilisation d'une couche FTP modifiée (capable de signaler directement à l'agent de transmission l'arrivée d'un fichier, action symbolisée par la flèche 44 sur la figure 4b) alors que dans le premier cas il est possible d'utiliser n'importe quel composant du commerce.

Dans les deux cas (connecteur passif ou connecteur réactif), les diodes de données existantes introduisent de la latence sur le guichet émetteur 10.

Le démarrage de la transmission d'un fichier ne s'effectue que lorsque celui-ci a été entièrement déposé sur le guichet émetteur 10. Cela introduit un temps de latence dépendant de la taille du fichier.

Les mécanismes de détection de présence d'un fichier à transmettre sont plus ou moins performants selon qu'il s'agit d'un connecteur réactif 40b ou d'un connecteur passif 40a, et selon les choix d'implémentation (par exemple : fréquence de polling, communication entre serveur FTP et agent de transmission, etc.).

Le but du connecteur ici décrit, par rapport aux connecteurs de l'art antérieur, est de supprimer le temps de latence introduit par la réception du fichier sur le guichet émetteur. En effet les mécanismes existant nécessitent la présence de la totalité du fichier sur le guichet émetteur 10. Pour améliorer ce point il faut avoir la capacité de transférer le fichier au fil de l'eau lors de sa réception. Cela permet de gagner le temps de latence lié à l'attente du fichier complet.

L'idée est de faire passer le fichier du guichet émetteur 10 vers le guichet récepteur 12 paquet par paquet dès leur arrivée et de se servir de la numérotation de paquets pour reconstruire le fichier coté guichet récepteur 12.

Trois variantes sont ici décrites, à titre non limitatif, pour mettre en place un tel connecteur :

### • Variante 1 : Encapsulation UDP

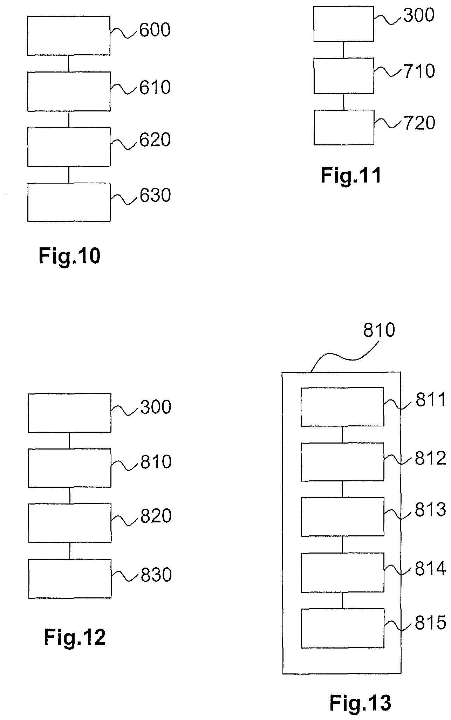

Dans une première variante, dite encapsulation UDP (voir figures 6 et 10), une source de fichiers 30 dépose un fichier sur le guichet émetteur 10. Mais contrairement à l'art antérieur, le connecteur 61, selon cet exemple de mise en oeuvre de l'invention, n'attend pas l'arrivée de la totalité du fichier pour commencer à transmettre du guichet émetteur 10 vers le guichet récepteur 12. Dès qu'un paquet, ou bloc, TCP (Transmission Control Protocol) dudit fichier est reçu par le guichet émetteur 10 (flèche 65 sur la figure 6) et acquitté (flèche 64 sur la figure 6), il est transmis (flèche 62 sur la figure 6) à la couche FTP pour traitement et reconstitution du fichier, ainsi (flèche 63 sur la figure 6) qu'à une application 66 en charge de l'encapsuler dans un protocole UDP. Les trames UDP sont envoyées vers le guichet récepteur 12 à travers les diodes optiques 11.

A la réception des trames UDP, une application du guichet récepteur 12 extrait les informations TCP de la trame UDP (fonction de dés-encapsulation UDP 67, c'est-à-dire opération inverse d'une encapsulation, qui est un ajout de données en début et/ou en fin de fichier envoyé) et une application de contrôle 68 utilise les informations de numérotation contenues dans la trame TCP pour vérifier que tous les blocs nécessaires à la reconstruction du fichier sont présents.

En cas de perte détectée d'un bloc (fonction 69a figure 6), une alerte est envoyée à un opérateur, par exemple humain, pour demander la reprise manuelle de la transmission des éléments manquants du fichier.

S'il n'y a pas de perte de données (fonction 69b figure 6), le fichier reconstitué est stocké au niveau du guichet récepteur 12.

Cette variante d'encapsulation UDP induit un autre avantage dans la réalisation du système de transmission unidirectionnelle de données 20. En effet, afin d'éviter de créer un nouvel élément de contrôle sur arrivée, on utilise pour ce faire les numérotations de paquet TCP (Transmission Control Protocol) en les détournant de leur utilisation d'origine.

Le guichet récepteur 12 n'effectue pas les fonctions d'une couche TCP en ce qui concerne les acquittements et la régulation de flux, il conserve uniquement la fonction de contrôle sur arrivée 68.

Une difficulté est de suivre correctement les échanges entre le client FTP de la source de fichiers, et le serveur FTP du guichet émetteur 10 car ces échanges se font sur deux ports consacrés, pour le premier au contrôle, et pour le second aux données. Il est préférable de choisir alors de travailler en mode passif sur des ports bien particuliers. Dans ce mode serveur FTP détermine lui-même le port de connexion à utiliser pour permettre le transfert des données (data connexion) et le communique au client. Cela permet de maitriser les ports utilisés par le guichet émetteur.

Une des limitations de cette variante d'encapsulation UDP est l'obligation de récupérer l'information dans les trois (au cas où on utilise trois diodes en parallèle) mémoires tampon associées aux trois diodes optiques 11 et dés-encapsuler (fonction 67) le paquet TCP dans chaque paquet UDP pour pouvoir procéder au contrôle sur arrivée (fonction 68).

### • Variante 2 : Transfert direct TCP (Transmission Control Protocol)

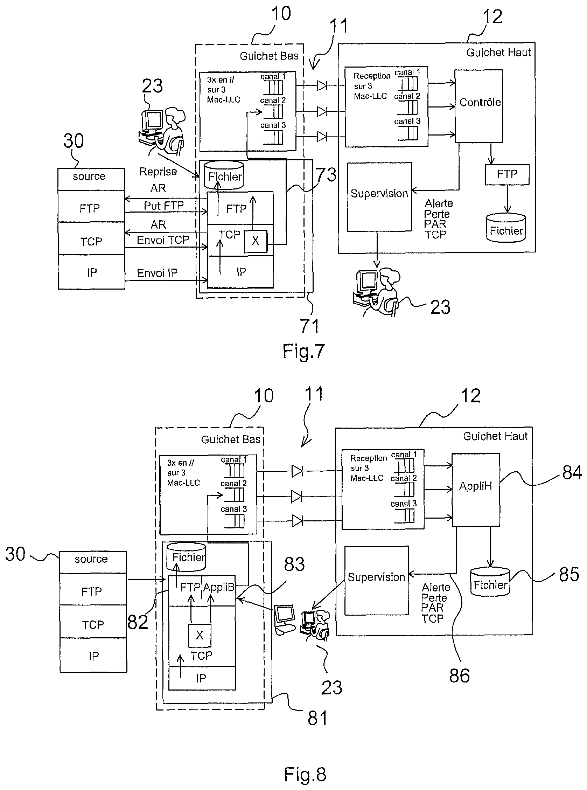

Dans une seconde variante dite de transfert direct TCP (illustré figures 7 et 11), pour gagner en performance, on ne procède plus à une encapsulation UDP. Le connecteur 71 envoie directement le paquet TCP (flèche 73 sur la figure 7) sur un niveau MAC-LLC (Media Access Control - Logical Link Control) pour être transmis tel quel.

On rappelle que selon la définition d'usage, le Contrôle d'accès au support (Media Access Control en anglais ou MAC) est une sous-couche, selon les standards de réseaux informatiques IEEE 802.x, de la partie inférieure de la couche de liaison de données dans le modèle OSI. Elle sert d'interface entre la partie logicielle contrôlant la liaison d'un noeud (Contrôle de la liaison logique) et la couche physique (matérielle). La sous-couche de contrôle de la liaison logique (Logical Link Control en anglais, ou LLC) est la moitié haute de la couche 2 - liaison - du modèle OSI, qui permet de fiabiliser le protocole MAC par un contrôle d'erreur et un contrôle de flux.

Coté guichet récepteur 12 il n'y a pas de dés-encapsulation UDP à réaliser, ce qui permet d'augmenter les performances d'extraction des mémoires tampon et de ce fait de diminuer les cas de perte par écrasement dans les mémoires tampon d'entrée.

Les contrôles sur arrivée (bloc 68) se font, comme dans la première variante, avec les éléments de contrôle contenus dans le protocole TCP. La suppression de l'encapsulation 66 et de l'étape de dés-encapsulation 67 augmente le débit utile entre les deux guichets.

### • Variante 3 : Transfert de Blocs de fichier

Dans une troisième variante dite de transfert de blocs de fichiers (voir figures 8 et 12), la différence, vis-à-vis de la variante de transfert direct TCP, porte sur le fait qu'au lieu de transférer le paquet TCP, le connecteur 81 récupère le bloc de fichier extrait de la couche TCP, puis le transfère vers une fonction FTP 82 et vers une application (notée AppliB dans la suite de la description) 83 en charge de le transférer de l'autre coté des diodes 11 et utilisant directement le niveau MAC-LLC.

Cette couche TCP, au niveau du guichet émetteur 10, réalise deux fonctions :
- gestion du protocole FTP pour répondre (envoyer un accusé de réception) au guichet émetteur, avec pour effet au niveau de la source 30 de reconstituer le fichier comme le fait un serveur FTP classique et de le stocker
- exécution d'une application AppliB 83 qui a pour objectif d'associer un numéro au bloc de fichier correspondant aux éléments de fichier extraits du protocole TCP, ainsi qu'une référence de fichier et de le transmettre aux couches MAC-LLC pour le faire passer au guichet récepteur 12 à travers les diodes optiques 11.

La redondance de l'information est assurée par une transmission en parallèle du bloc de fichier. Chaque bloc transmis par une diode de données est stocké dans une mémoire tampon associée à la diode. Les mémoires tampon des trois diodes sont du type « premier arrivé - premier sorti » (FIFO dans la littérature anglo-saxonne. Cette remarque est valable pour chacune des trois variantes décrites.

Au niveau du guichet récepteur 12, une application logicielle AppliH 84 extrait des mémoires tampons (buffers), correspondants aux transmissions effectuées en parallèle, les blocs qui sont arrivés et traite le premier d'entre eux qu'elle reconnaît comme correct en se basant sur les numéros de bloc et sa connaissance du numéro attendu, les autres instances n'étant pas traitées. Son objectif est de reconstituer l'ensemble de la suite logique des blocs numérotés

Cela permet d'éviter des traitements inutiles qui pourraient amener à des pertes par saturations des mémoires tampon. L'application appliH 84 est en charge de la reconstruction du fichier et de son stockage 85 ou d'alerter (fonction 86) la fonction de supervision 23 en cas de perte de blocs.

Les applications AppliB et AppliH sont conçues de telle sorte que le protocole d'échange de AppliB vers AppliH assure les fonctions suivantes (figure 13):
- gérer le séquencement des échanges,
- repérer le bloc transmis de manière unique et ce pour un fichier donné (pour le cas de reprise),
- contrôler qu'il ne manque pas des blocs de fichier pour sa reconstruction,
- finaliser le transfert de fichier sur reprise uniquement des blocs manquants,
- prendre en compte les événements du protocole FTP pour les répercuter sur les transferts entre les deux guichets. Par exemple, une interruption du transfert FTP se traduit par une indication au guichet récepteur 12 d'arrêter l'écoute et d'effacer la partie de fichier déjà reçue.

Pour ce qui est des cas de reprise sur échec, si un bloc est manquant et que le fichier ne peut pas être reconstruit, un message d'alerte est envoyé à la supervision 23 en indiquant les caractéristiques des paquets à retransmettre (numéro de paquet, fichier).

Par rapport aux deux autres variantes (figures 6 et 7), la reprise est facilitée car il n'y pas besoin de conserver des informations d'association entre les numéros de bloc et les blocs de fichier, l'application logicielle AppliB étant alors capable de faire le lien direct en le numéro et le fichier à considérer.

Dans cette variante de transfert de blocs de fichiers, la gestion de la réception de fichiers en parallèle est facilitée. Il en est de même pour la retransmission en cas de perte.

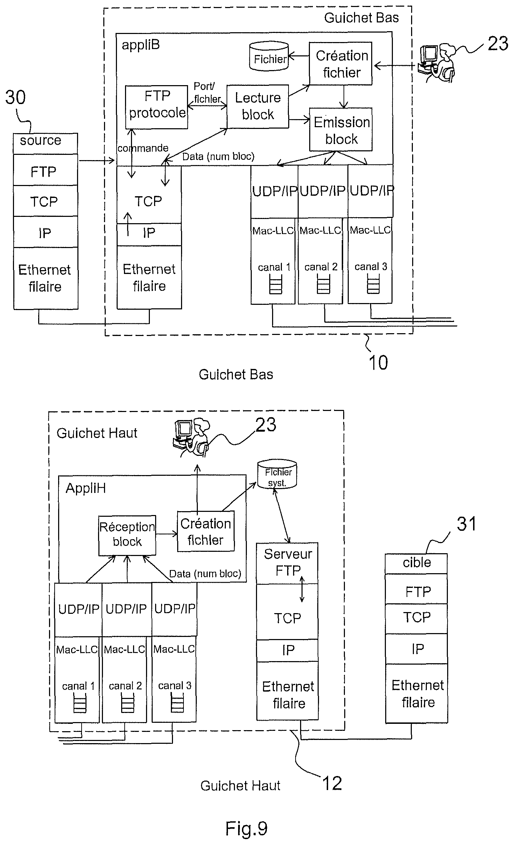

Dans une variante, si l'on veut faciliter un peu plus les développements des applications AppliB et AppliH, en concédant une petite perte de performance, il est possible d'utiliser une pile de protocole standard IP/UDP au lieu d'attaquer directement les couches MAC/LLC. Cela donne les schémas de la figure 9.

Les gains introduits par les connecteurs 61, 71, 81 qui viennent d'être décrits, dans trois variantes de mise en oeuvre, dépendent du cadre d'utilisation. Les cas les plus favorables par rapport à l'état de l'art sont les suivants:
- le transfert de gros fichiers. En effet le temps d'attente de la totalité du fichier (pour les fonctionnements actuel) est proportionnel à la taille du fichier
- le cas où le débit bout en bout du système de transmission unidirectionnel de données (complet : guichets + éléments physique) est plus élevé que le débit du lien d'alimentation du guichet émetteur. Dans le cas contraire la diode joue le rôle d'entonnoir et donc introduit une latence. Ceci est d'autant plus vrai que le flux d'entrée est soutenu.

Le connecteur, tel que décrit, permet de réduire le temps de réception du fichier qui peut être important dans le cas d'un gros fichier.

### 3/ Introduction d'une fonction de reprise manuelle contextuelle.

Par principe, dans une diode de données, il n'est pas possible de renvoyer des acquittements du guichet récepteur 12 vers le guichet émetteur 10, et de demander des retransmissions de données. Or il peut subsister des cas où des pertes de données irrécupérables ne permettent pas de reconstruire le fichier.

En l'absence de pilotage de guichet émetteur 10 par le guichet récepteur 12, il est connu d'utiliser un opérateur pour effectuer les reprises sur erreur. Si des éléments sont détectés comme manquants, une alerte est remontée à un opérateur 23 en charge de relancer manuellement le transfert du fichier concerné.

Le procédé décrit ici permet de mettre en place une retransmission sélective. En effet, le guichet émetteur 10 est en charge de conserver la classification et la numérotation des paquets qui ont été envoyés au guichet récepteur 12. Quand ce dernier est dans l'impossibilité de reconstituer un fichier car il a perdu des blocs, il fournit à l'opérateur 23 l'identification des blocs perdus. L'opérateur 23 fournit alors cette information au guichet émetteur 10 qui ne retransmet que les blocs nécessaires. Ce type de reprise peut permettre d'accroître les performances de la retransmission dans le cas de gros fichiers :
- En évitant de prendre un délai supplémentaire important dans le cas d'une retransmission complète.
- En évitant de reproduire potentiellement le même échec provoqué par la répétition du même scénario.

### Avantages

Le dispositif et les procédés décrits plus haut permettent d'améliorer les performances des systèmes de transmission unidirectionnelle de données en termes de débit et de temps de latence.

Le connecteur permet de faire du transfert d'information au fil de l'eau sans attendre l'arrivée complète d'un fichier.

L'introduction d'une redondance d'information en parallèle permet d'éviter de diviser la bande passante du médium physique par le nombre de transmission de l'information pour éviter les pertes.

La reprise sélective manuelle permet à un opérateur de ne relancer qu'une retransmission des blocs perdu et non de la totalité du fichier.

## Revendications

1. Procédé de transfert unidirectionnel de données entre un premier réseau dit réseau ouvert, et un second réseau dit réseau protégé, ledit procédé étant utilisé pour transférer des données d'un guichet émetteur (10) relié au réseau ouvert, vers un guichet récepteur (12) relié au réseau protégé, à travers au moins une voie de transmission comportant une diode de données physique (11), le procédé comportant :
- une étape de transmission d'un ficher en cours de réception du guichet émetteur (10) vers le guichet récepteur (12), paquet par paquet dès l'arrivée desdits paquets au niveau du guichet émetteur, et d'utilisation de la numérotation de paquets pour reconstruire le fichier coté guichet récepteur,
**caractérisé en ce que** le procédé comporte :
- une étape d'émission des données à transmettre, sur N, N>=2, voies de transmission en parallèle, protégées chacune par une diode physique, et une étape de réception par le guichet récepteur des données reçues, dans N mémoires tampon,
- une étape d'introduction d'un décalage de temps entre les informations redondantes transmises sur les différentes voies de transmission.

2. Procédé selon la revendication 1, **caractérisé en ce qu'**il comporte une étape d'affectation aux opérations de lecture des paquets reçus sur le guichet récepteur (12) d'un niveau de priorité plus élevé que les autres opérations effectuées sur ce guichet récepteur (12).

3. Procédé selon l'une quelconque des revendications 1 à 2, **caractérisé en ce qu'**il comporte des étapes suivantes :
300 - une source de fichiers dépose un fichier sur le guichet émetteur,
610 - dès qu'un bloc du fichier, configuré dans un protocole de transfert de fichier de type TCP (Transmission Control Protocol) est reçu par le guichet émetteur et acquitté, il est transmis à une couche applicative gérant un protocole de transfert de fichiers de type FTP (File Transfer Protocol) pour traitement et reconstitution du fichier, ainsi qu'a une application en charge de l'encapsuler dans un protocole sans accusé de réception, tel que UDP (User Datagram Protocol),
620 - les trames UDP contenant le bloc de fichier sont envoyées vers le guichet récepteur au travers de chaque Diode,
630 - à la réception des trames UDP, le guichet récepteur extrait de la trame les informations TCP et une application utilise les informations de numérotation contenues dans la trame TCP pour vérifier que tous les blocs nécessaires à la reconstruction du fichier sont présents.

4. Procédé selon l'une quelconque des revendications 1 à 2, **caractérisé en ce qu'**il comporte des étapes suivantes :
300 - une source de fichiers dépose un fichier sur le guichet émetteur,
710 - dès qu'un bloc TCP du fichier est reçu par le guichet émetteur et acquitté, il est envoyé directement sur un niveau MAC-LLC (protocole Media Access Control - sous couche de contrôle de la liaison logique Logical Link Control) pour être transmis tel quel à travers chaque diode,
720 - à la réception des blocs TCP le guichet récepteur (12) utilise les informations de numérotation contenues dans la trame TCP pour vérifier que tous les blocs nécessaires à la reconstruction du fichier sont présents.

5. Procédé selon l'une quelconque des revendications 1 à 2, **caractérisé en ce qu'**il comporte des étapes suivantes :
300 - une source de fichiers dépose un fichier sur le guichet émetteur (10),
810 - dès qu'un bloc TCP du fichier est reçu par le guichet émetteur et acquitté, le bloc de fichier extrait de la couche TCP est récupéré, puis envoyé vers un serveur FTP, puis envoyé à un agent de transmission en charge de le transférer vers le guichet récepteur (12) à travers chaque diode,
820 - transmission en parallèle du bloc de fichier,
830 - au niveau du guichet récepteur (12), extraction, par une application logicielle AppliH, des mémoires tampons (buffers), correspondants aux transmissions effectuées à travers chaque diode, les blocs qui sont arrivés et traite le premier d'entre eux qu'elle reconnaît comme correct, les autres instances étant éliminées.

6. Procédé selon la revendication 5, **caractérisé en ce que**, dans l'étape 810, le transfert est réalisé en utilisant le niveau MAC-LLC

7. Procédé selon la revendication 5, **caractérisé en ce que**, dans l'étape 810, le transfert est réalisé en utilisant le niveau IP/UDP (Internet Protocol / User Datagram Protocol)

8. Procédé selon l'une quelconque des revendications 5 à 7, **caractérisé en ce que** dans l'étape 810, la couche TCP, au niveau du guichet émetteur (10), réalise deux fonctions :
- gestion du protocole FTP pour envoyer un accusé de réception à l'émetteur,
- association, par une fonction AppliB , d'un numéro au bloc de fichier ainsi qu'une référence de fichier, et transmission pour faire passer le bloc de fichier au guichet récepteur (12) à travers chaque diode optique.

9. Procédé selon l'une quelconque des revendications 5 à 8, **caractérisé en ce que** l'étape 830 comprend également la reconstruction du fichier et son stockage ou l'émission d'une alerte à une fonction de supervision (23) en cas de perte de paquet.

10. Procédé selon l'une quelconque des revendications 5 à 9, **caractérisé en ce que**, dans l'étape 810, on met en oeuvre un protocole d'échange de appliB vers appliH assurant les fonctions suivantes :
811 · gérer le séquencement des échanges,
812 · repérer le bloc transmis de manière unique et ce pour un fichier donné (pour le cas de reprise),
823 · contrôler qu'il ne manque pas des blocs de fichier pour sa reconstruction,
814 · finaliser transfert de fichier sur reprise uniquement des blocs manquants,
815 · prendre en compte les événements du protocole FTP pour les répercuter sur les transferts entre les deux guichets.

11. Procédé selon la revendication 10, **caractérisé en ce que**, dans l'étape 815, une interruption du transfert FTP se traduit par une indication au guichet récepteur d'arrêter l'écoute et d'effacer la partie de fichier déjà reçue.

12. Dispositif de transfert unidirectionnel de données entre un premier réseau dit réseau ouvert, et un second réseau dit réseau protégé, ledit dispositif comprenant un guichet émetteur (10), un guichet récepteur (12), au moins une voie de transmission comportant une diode de données physique (11), **caractérisé en ce que** le dispositif est adapté à mettre en oeuvre un procédé selon l'une quelconque des revendications 1 à 11.

## Patentansprüche

1. Verfahren zur unidirektionalen Übertragung von Daten zwischen einem ersten Netzwerk, das als offenes Netzwerk bezeichnet wird, und einem zweiten Netzwerk, das als geschütztes Netzwerk bezeichnet wird, wobei das Verfahren verwendet wird, um Daten über mindestens einen Übertragungsweg, der eine physische Datendiode (11) umfasst, von einem Sender-Desk (10), der mit dem offenen Netzwerk verbunden ist, zu einem Empfänger-Desk (12) zu übertragen, der mit dem geschützten Netzwerk verbunden ist, wobei das Verfahren umfasst:
- einen Schritt des Übertragens einer Datei, die gerade vom Sender-Desk (10) empfangen wird, Paket für Paket zum Empfänger-Desk (12) sobald die Pakete beim Sender-Desk eintreffen, und des Verwendens der Paketnummerierung, um die Datei auf Seite des Empfänger-Desk zu rekonstruieren, **dadurch gekennzeichnet, dass** das Verfahren umfasst:
- einen Schritt des Sendens der zu übertragenden Daten parallel auf N, N>=2, Übertragungswegen, die jeder über eine physische Diode geschützt sind, und einen Schritt des Empfangens, durch den Empfänger-Desk, der empfangenen Daten in N Pufferspeichern,
- einen Schritt des Einfügens eines Zeitversatzes zwischen den redundanten Informationen, die auf den verschiedenen Übertragungswegen übertragen werden.

2. Verfahren nach Anspruch 1, **dadurch gekennzeichnet, dass** es einen Schritt umfasst des Zuteilens einer höheren Prioritätsebene zu den Leseoperationen der am Empfänger-Desk (12) empfangenen Pakete als zu den anderen Operationen, die an diesem Empfänger-Desk (12) vorgenommen werden.

3. Verfahren nach einem der Ansprüche 1 bis 2, **dadurch gekennzeichnet, dass** es folgende Schritte umfasst:
300 - eine Dateiquelle legt eine Datei am Sender-Desk ab,
610 - sobald ein Block der Datei, der in einem Dateiübertragungsprotokoll vom Typ TCP (Transmission Control Protocol) konfiguriert ist, vom Sender-Desk empfangen und quittiert wird, wird er zur Verarbeitung und Rekonstruktion der Datei zu einer Anwendungsschicht, die ein Dateiübertragungsprotokoll vom Typ FTP (File Transfer Protocol) verwaltet, sowie zu einer Anwendung übertragen, die dafür zuständig ist, ihn in ein Protokoll ohne Empfangsbestätigung, wie etwa UDP (User Datagram Protocol) zu kapseln,
620 - die UDP-Frames, die den Dateiblock enthalten, werden über jede Diode zum Empfänger-Desk gesendet,
630 - der Empfänger-Desk extrahiert beim Empfang der UDP-Frames die TCP-Informationen aus dem Frame, und eine Anwendung verwendet die im TCP-Frame enthaltenen Nummerierungsinformationen, um zu verifizieren, dass alle die Blöcke, die zur Rekonstruktion der Datei erforderlich sind, vorhanden sind.

4. Verfahren nach einem der Ansprüche 1 bis 2, **dadurch gekennzeichnet, dass** es folgende Schritte umfasst:
300 - eine Dateiquelle legt eine Datei am Sender-Desk ab,
710 - sobald ein TCP-Block der Datei vom Sender-Desk empfangen und quittiert wird, wird er direkt auf einer MAC-LLC-Ebene (Protokoll Media Access Control-Steuerungs-Teilschicht der logischen Verbindung Logical Link Control) gesendet, um so wie er ist über jede Diode übertragen zu werden,
720 - der Empfänger-Desk (12) verwendet beim Empfang der TCP-Blöcke die im TCP-Frame enthaltenen Nummerierungsinformationen, um zu verifizieren, dass alle die Blöcke, die zur Rekonstruktion der Datei erforderlich sind, vorhanden sind.

5. Verfahren nach einem der Ansprüche 1 bis 2, **dadurch gekennzeichnet, dass** es folgende Schritte umfasst:
300 - eine Dateiquelle legt eine Datei am Sender-Desk (10) ab,
810 - sobald ein TCP-Block der Datei vom Sender-Desk empfangen und quittiert wird, wird der von der TCP-Schicht extrahierte Dateiblock wiederhergestellt, anschließend zu einem FTP-Server gesendet, anschließend zu einem Übertragungsagenten gesendet, der dafür zuständig ist, ihn über jede Diode zum Empfänger-Desk (12) zu senden,
820 - parallele Übertragung des Dateiblocks,
830 - Extrahieren, auf Ebene des Empfänger-Desks (12) durch eine logische Anwendung AppliH, der eingetroffenen Blöcke aus den Pufferspeichern (Buffers), die den über jede Diode vorgenommenen Übertragungen entsprechen, und verarbeitet den ersten davon, den sie als richtig erkennt, wobei die anderen Instanzen verworfen werden.

6. Verfahren nach Anspruch 5, **dadurch gekennzeichnet, dass** im Schritt 810 die Übertragung unter Verwendung der MAC-LLC-Ebene ausgeführt wird.

7. Verfahren nach Anspruch 5, **dadurch gekennzeichnet, dass** im Schritt 810 die Übertragung unter Verwendung der IP/UDP-Ebene (Internet Protocol / User Datagram Protocol) ausgeführt wird.

8. Verfahren nach einem der Ansprüche 5 bis 7, **dadurch gekennzeichnet, dass** im Schritt 810 die TCP-Schicht auf Ebene des Sender-Desk (10) zwei Funktionen ausführt:
- Verwaltung des FTP-Protokolls, um eine Empfangsbestätigung an den Sender zu senden,
- Zuweisen, durch eine AppliB-Funktion, einer Nummer zum Dateiblock sowie eines Dateiverweises, und Übertragen, um den Dateiblock über jede optische Diode an den Empfänger-Desk (12) zu übermitteln.

9. Verfahren nach einem der Ansprüche 5 bis 8, **dadurch gekennzeichnet, dass** der Schritt 830 ebenfalls die Rekonstruktion der Datei und ihr Speichern, oder das Ausgeben eines Alarms an eine Überwachungsfunktion (23) im Falle von Paketverlust umfasst.

10. Verfahren nach einem der Ansprüche 5 bis 9, **dadurch gekennzeichnet, dass** im Schritt 810 ein Austauschprotokoll von appliB zu appliH eingesetzt wird, das die folgenden Funktionen sicherstellt:
811 - Verwalten der Abfolge der Austausche,
812 - eindeutiges Ermitteln des übertragenen Blocks, und zwar für eine gegebene Datei (für den Wiederholungsfall),
823 - Kontrollieren, dass keine Dateiblöcke für die Rekonstruktion derselben fehlen,
814 - Abschließen von Dateiübertragung mit Wiederholung nur der fehlenden Blöcke,
815 - Berücksichtigen der Ereignisse des FTP-Protokolls, um sie auf die Übertragungen zwischen den zwei Desks umzulegen.

11. Verfahren nach Anspruch 10, **dadurch gekennzeichnet, dass** sich im Schritt 815 eine Unterbrechung der FTP-Übertragung in einem Hinweis an den Empfänger-Desk auswirkt, das Abhören zu beenden und den bereits empfangenen Dateiteil zu löschen.

12. Vorrichtung zur unidirektionalen Übertragung von Daten zwischen einem ersten Netzwerk, das als offenes Netzwerk bezeichnet wird, und einem zweiten Netzwerk, das als geschütztes Netzwerk bezeichnet wird, wobei die Vorrichtung einen Sender-Desk (10), einen Empfänger-Desk (12), mindestens einen eine physische Datendiode (11) umfassenden Übertragungsweg umfasst, **dadurch gekennzeichnet, dass** die Vorrichtung dazu geeignet ist, ein Verfahren nach einem der Ansprüche 1 bis 11 umzusetzen.

## Claims

1. Method for unidirectional data transfer between a first so-called open network and a second so-called protected network, said method being used to transfer data from a transmitter desk (10) connected to the open network to a receiver desk (12) connected to the protected network, via at least one transmission path comprising a physical data diode (11), the method comprising:
- a step of transmitting a file being received from the transmitter desk (10) to the receiver desk (12), packet by packet, upon arrival of said packets at the transmitter desk, and of using the numbering of packets to reconstruct the file at the receiver desk,
**characterised in that** the method comprises:
- a step of transmitting the data to be transmitted, on N, N>=2, parallel transmission paths, each protected by a physical diode, and a step of receiving the received data by the receiver desk, in N buffer memories,
- a step of introducing a time delay between the redundant information transmitted over the different transmission paths.

2. Method according to claim 1, **characterised in that** it comprises a step of assigning a higher priority level to the operations for reading the packets received on the receiver desk (12) than that of the other operations carried out on said receiver desk (12).

3. Method according to any of claims 1 to 2, **characterised in that** it comprises the following steps:
300 - a file source deposits a file on the transmitter desk,
610 - as soon as a block of the file, configured in a file transfer protocol of the type TCP (Transmission Control Protocol) is received by the transmitter desk and acknowledged, it is transmitted to an application layer managing a file transfer protocol of the type FTP (File Transfer Protocol) for the processing and reconstruction of the file, as well as to an application responsible for the encapsulation thereof in a protocol without acknowledgement of receipt, such as UDP (User Datagram Protocol),
620 - the UDP frames containing the file block to the receiver desk are sent through each Diode,
630 - upon receipt of the UDP frames, the receiver desk extracts the TCP information from the frame, and an application uses the numbering information contained in the TCP frame to check that all of the blocks required to reconstruct the file are present.

4. Method according to any of claims 1 to 2, **characterised in that** it comprises the steps of:
300 - a file source deposits a file on the transmitter desk,
710 - as soon as a TCP block of the file is received by the transmitter desk and acknowledged, it is directly sent over a MAC-LLC level (Media Access Control protocol - control sublayer of the Logical Link Control) to be transmitted as is through each diode,
720 - upon receipt of the TCP blocks, the receiver desk uses the numbering information contained in the TCP frame to check that all of the blocks required to reconstruct the file are present.

5. Method according to any of claims 1 to 2, **characterised in that** it comprises the steps of:
300 - a file source deposits a file on the transmitter desk (10),
810 - as soon as a TCP block of the file is received by the transmitter desk and acknowledged, the file block extracted from the TCP layer is recovered, then sent to an FTP server, and then sent to a transmission agent responsible for the transfer thereof to the receiver desk (12) through each diode,
820 - transmitting the file block in parallel,
830 - at the receiver desk (12), extracting, by a software application AppliH, from the buffer memories corresponding to the transmissions carried out through each diode, the blocks that have arrived and processes the first thereof recognised as correct, other occurrences being eliminated.

6. Method according to claim 5, **characterised in that**, in step 810, the transfer is carried out using the MAC-LLC level.

7. Method according to claim 5, **characterised in that**, in step 810, the transfer is carried out using the IP-UDP (Internet Protocol/User Datagram Protocol) level.

8. Method according to any of claims 5 to 7, **characterised in that**, in step 810, the TCP layer, at the transmitter desk (10), carries out the two functions of:
- managing the FTP protocol in order to send an acknowledgement of receipt to the transmitter,
- associating, by a function AppliB, a number to the file block in addition to a file reference, and transmitting, in order to convey the file block to the receiver desk (10) through each optical diode.

9. Method according to any of claims 5 to 8, **characterised in that** step 830 further comprises the reconstruction of the file and the storage thereof or the transmission of an alert to a supervising function (23) in the event of packet loss.

10. Method according to any of claims 5 to 9, **characterised in that**, in step 810, a protocol for exchanging from appliB to appliH is implemented, which performs the functions of:
811 - managing the sequencing of the exchanges,
812 - identifying the block transmitted in a unique manner and for a given file (in the case of recovery),
823 - checking that no file blocks are missing for file reconstruction,
814 - finalising the file transfer solely by recovery of the missing blocks,
815 - taking into account the events of the FTP protocol in order to apply said events to the transfers between the two desks.

11. Method according to claim 10, **characterised in that**, in step 815, an interruption in the FTP transfer results in an indication to the receiver desk to stop listening and erase the file part already received.

12. Device for unidirectional data transfer between a first so-called open network and a second so-called protected network, said device comprising a transmitter desk (10), a receiver desk (12), and at least one transmission path comprising a physical data diode (11), **characterised in that** the device is suitable for implementing a method according to any of claims 1 to 11.
